# EUROPEAN PATENT APPLICATION

(11) **EP 2 239 658 A1**
(43) Date of publication of application: **13.10.2010**
(21) Application number: 09157565.4
(22) Date of filing: 08.04.2009
(51) Int. Cl.: G06F 9/44

(54) **Custom command line switch**

(71) Applicant: Siemens Aktiengesellschaft, 80333 München (DE)
(72) Inventor: Borriello, Diego, 16040, Cogorno (IT); Camera, Fabrizio, 15069, Serravalle Scrivia (IT)
(74) Representative: Kley, Hansjörg

(57) **Abstract**

Method for improving the startup features of a development environment (42) comprising the steps of:
a) starting up a development environment (42) that exposes execution context (46) as an automation model (44);
b) at starting up of the development environment (42) loading of a plug-in (48) by the development environment (42);
c) providing a command line option (62, 64, 68) by the plug-in (48), whereas a command representing said command line option (62, 64, 68) calls up at least a part of the execution context (46).

## Description

The present invention relates to a method and a system for improving the startup features of a development environment.

As part of the development of complex systems for manufacturing execution systems, third party tools or functionalities which are for example comprised by an integrated development environment are often required.

In order to integrate the third party tools, it is necessary to find techniques to pilot them and make them accomplish particular tasks.

The techniques can consist in direct user interaction or, as part of a more complex task, in an application of a management environment. In both cases the possibilities of interaction with the third party tool are limited by the capabilities provided by the tool vendor.

Up to now the common practice is limited by mainstream technology. Usually two ways of achieving the intended goal of automating third party tools exist, namely command line options and automation models.

Command line options are applications that provide a command shell. Command line options are advantageous, since they provide a simple solution that can be adopted both, by human users because every "command shell" supports it and by custom applications because (almost) every development environment allows the launch of executables by passing specific command options. Nevertheless, a drawback of command-line based solution is the limitation to the decisions taken by developers of the third party code. This limitation can usually not be overcome without having access to internals of the application such as the original source code.

An automation model is an infrastructure whereby external modules can access and manipulate automation objects exposed by an application. In contrast to a command line option, an automation model provides the advantage of richer programming possibilities. It is possible to obtain behaviors even not explicitly foreseen by the original developers by combining base functionalities.

The drawback of an automation model is the need to develop some software module in order to exploit it and the complexity of the model (where present). If the exposed automation model is too complex, the effort required to learn it could be too big compared to the value of the functionality to build; the consequence is often to drop features and not to deliver the whole possible functionality to the user.

The object of the present invention is therefore to simplify access to an automation model and to improve the startup features of a development environment.

This object is solved by the measures taken in accordance with the independent claims:

In order to improve the startup features of a development environment that exposes execution context as an automation model, at starting up of the development environment a plug-in is loaded by the development environment. A command line option is provided by the plug-in such that a command representing said command line option calls up at least a part of the execution context.

Preferred embodiments are described in the dependent claims:

The execution context that is called up by the command can be represented by the command line option. The plug-in can be connected to a management console or to another actor that is adapted for calling up the command line option. The management console provides a command line into which the command representing said command line option can be entered. The execution context preferably comprises a class and/or an object of a class and/or or a function. The command line option can be a representation of a combination and/or sequence of elements of the execution context. For example, the command line option can be a representation of a function, and/or an object, and/or a combination of functions, and/or a combination of objects, and/or a combination of functions and objects. Preferably, the execution context represented by the command line options comprises a combination of functions and/or objects. An object can for example be an automation object exposed by an application, or an object of a class.

In other words, an embodiment of the present invention is the result of a balancing out of two contrasting forces: On the one hand side to be able to use the full potential of a third party application to create or extend tasks or functionalities and on the other hand side to be able to give to users or to an application a simple command line option to run and execute the custom tasks or functionalities.

In yet other words, in order to get to a compromise an embodiment of the present invention proposes a plug-in (alias addin, alias extension, etc. according to naming convention of the target environment) that is loaded during the executable startup, thus enabling to take part on the command line parsing activities. By reading its own command options it can perform the requested actions. Where this can be done, it is possible to get the best of both "worlds": the easiness of the command line and the richness of the automation capabilities.

Main advantages of the present invention are that the application can be launched in an easy way (using command line) and in one step without the need of a complex interaction and without requiring that the launcher module knows the internal model of the target application. At the same time a custom specific task can be performed exploiting the full powerful internal structure of the target tool.

The knowledge of the internals is required only once during the system initial development. After this phase all the possible callers can exploit the simplified interaction (command line) not requiring a session of "ad-hoc" development for each one of them.

Preferred embodiments are in the following described with the help of the following figures:

Figure 1: Flow chart for a traditional system of a command line option;

Figure 2: Flow chart for a traditional system of an automation model;

Figure 3: Flow chart for a preferred embodiment with a custom command line;

Figure 4: Preferred embodiment of the invention;

Figure 5: Preferred embodiment of the invention.

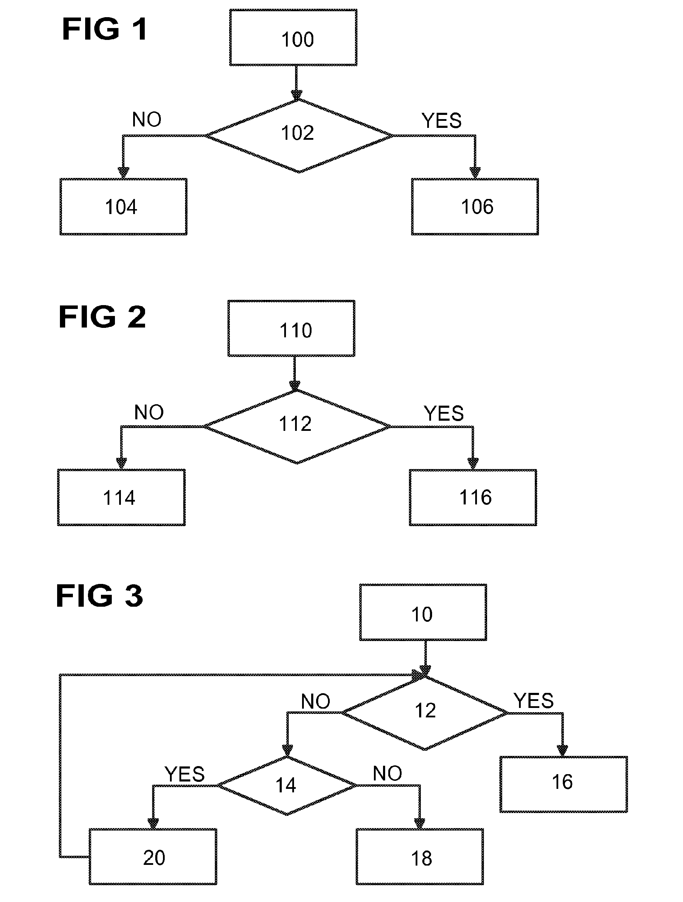

Figure 1 shows a flow chart for a traditional system of command line options according to the state of the art. In step 100 system needs for a command line interaction are determined. In step 102 it is determined whether a third party application provides the appropriate command line options that would satisfy the needs. In case the needs are not satisfied, there is no hope to succeed 104. In case the needs are satisfied, the command line options are used 106.

Figure 2 shows a flow chart for a traditional system of an automation model according to the state of the art. In step 110 system needs for a rich interaction are determined. In step 112 it is determined whether a third party application exposes the appropriate rich automation model that would satisfy the needs. In case the needs are not satisfied, there is no hope to succeed 114. In case the needs are satisfied, the automation model is used 116.

An automation model as described in figure 2 usually provides a higher chance to satisfy the needs of a user since the execution context is richer than the command line options described in figure 1. However, this is at the cost of a more complex interaction of the user with the development environment of an automation model. Figure 3 therefore illustrates a flow chart of a preferred embodiment with a custom command line. In step 10 the system needs for a custom interaction are determined. In step 12 it is determined whether a third party application provides the appropriate command line options. In case the needs are satisfied by the command line options provided by the third party application, these command line options are used 16. In case the command line options of the third party application do not satisfy the user needs, in step 14 it is determined whether the third party application exposes an automation model. In case the third party application exposes no automation model, there is no hope to succeed 18. In case the third party application exposes an automation model, in method step 20 the custom interaction is implemented as a custom command line.

A concrete example is to automatically open a Web Site on Microsoft® Visual Studio® 2005 from the command line. With Microsoft® Visual Studio® 2005 it is possible to create and open a type of project called "Web Site". This can be done only in an interactive way, i.e. by clicking on menu items or wizard buttons. Other types of projects can also be opened passing the project definition files as an argument on the command line. Nevertheless, this option is not available for "Web Sites" because a specific project file does not exist. Visual Studio® 2005 does not support this by default but the scenario can be enabled by using the proposed invention. It is possible to extend the Microsoft® Visual Studio® 2005 functionality for "Web Sites" by creating a new custom command line option switch and to reuse it thereafter.

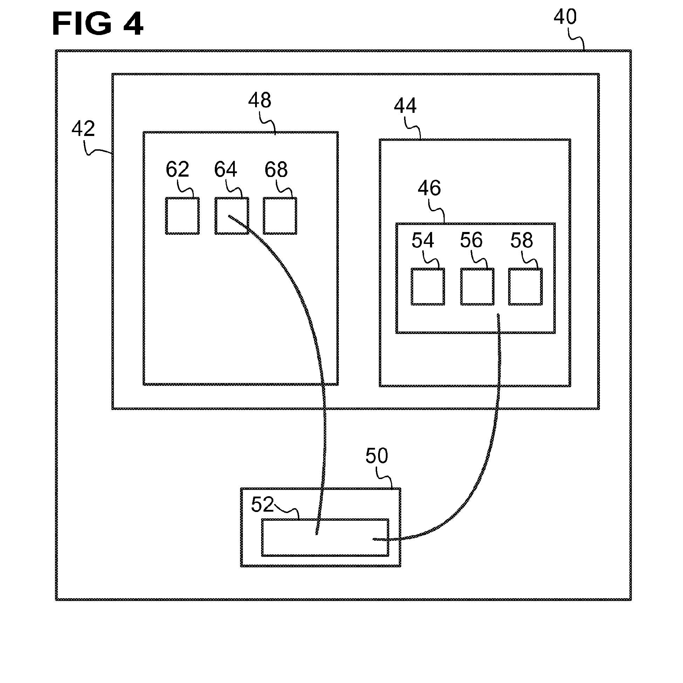

Figure 4 shows a preferred embodiment of the invention. A system 40 for improving access to an automation model comprises a development environment 42. The development environment 42 comprises an automation model 44, a plug-in 48, and a management console 50. The management console 50 comprises a command line 52. The automation model comprises execution context 46 which comprises objects 56, classes 58 and functions 54. The plug-in 48 comprises command line options 62, 64, 68.

In order to improve the startup features of a development environment 42 according to an embodiment of the invention the following steps are executed by the system 40:

The development environment 42 is started up. It exposes execution context 46 as an automation model 44. At starting up of the development environment 42 a plug-in 48 is loaded by the development environment 42. Command line options 62, 64, 68 are provided by the plug-in 48. The plug-in 48 is connected to a management console 50 or to another actor that is adapted for calling up the command line option 62, 64, 68. When a command representing one of said command line options 62, 64, 68 is called up, at least a part of the execution context 46 is called up. The execution context that is called up by the command is represented by the command line option.

According to other preferred embodiments, a management console 50 provides a command line 52 into which the command representing said command line option 62, 64, 68 can be entered.

According to another preferred embodiment the execution context 46 comprises a class 58 and/or an object 56 of a class and/or or a function 54.

According to another preferred embodiment the command line option 62, 64, 68 is a representation of a combination and/or sequence of elements 54, 56, 58 of the execution context 46.

According to another preferred embodiment the command line option 52, 64, 68 is a representation of a function 54, and/or an object 56, and/or a combination of functions 54, and/or a combination of objects 56, and/or a combination of functions 54 and objects 56.

According to another preferred embodiment execution context represented by the command line options comprises a combination of functions and/or objects.

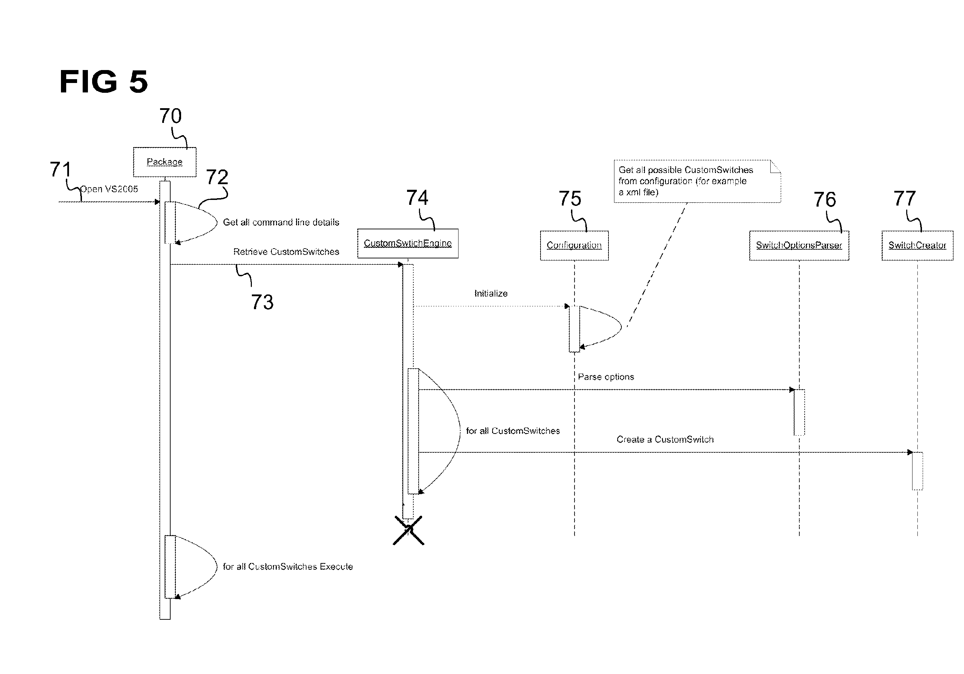

Figure 5 shows a preferred embodiment of the invention based on Microsoft® Visual Studio® 2005 (VS) platform. As starting point the component named "Package" 70 is used. In the sample implementation, "Package" 70 is a class derived from a base provided as part of the inner automation model of VS (exposed by VS SDK library). This sort of hook can be used the get access to various aspects of the lifecycle of the VS application.

In particular we used it (in this case) to gain access to the command line of the devenv.exe process (VS) and to be notified of the startup activities carried on. The provided diagram follows the notation of UML Sequence Diagrams. You can go step by step through the activities performed by the different entities involved.

The first action "Open VS2005" 71 is coming from the outside and can be started either by a user or by a third party module (here included other part of our own suite). Our "Package" 70, which is installed and registered, is then involved in the early startup phases. It can read the whole command line ("Get all command line details" 72 in the diagram) and start all the intended custom behaviors ("CustomSwitches" 73).

The internal organization of our implementation is built to be as flexible as possible. This is the reason to introduce other classes with a well defined role. "CustomSwitchEngine" 74 is given the command line text and read from a "Configuration" 75 entity which holds the list of features to activate.

Another piece of information is processed and returned by "SwitchOptionsParser" 76 which extracts fragments of useful data from the command line.Configuration data together with the processed command line are given to the "SwitchCreator" 77 which ultimately creates a real "CustomSwitch".

All the "CustomSwitches" instances are then returned to "Package" 70 which can run them all and complete the expected activities. In our case, one of the custom activities performed is the launch of a particular kind of VS project (WebSite) that can't be opened directly otherwise.

## Claims

**1.** Method for improving the startup features of a development environment (42) comprising the steps of:
a) starting up a development environment (42) that exposes execution context (46) as an automation model (44);
b) at starting up of the development environment (42) loading of a plug-in (48) by the development environment (42);
c) providing a command line option (62, 64, 68) by the plug-in (48), whereas a command representing said command line option (62, 64, 68) calls up at least a part of the execution context (46).

**2.** Method according to claim 1, whereas
execution context that is called up by the command is represented by the command line option.

**3.** Method according to claim 1 or 2, whereas
the plug-in (48) is connected to a management console (50) or to another actor that is adapted for calling up the command line option (62, 64, 68).

**4.** Method according to claim 3, whereas the management console (50) provides a command line (52) into which the command representing said command line option (62, 64, 68) can be entered.

**5.** Method according to any one of the preceding claims, whereas the execution context (46) comprises a class (58), and/or an object (56) of a class, and/or an automation object exposed by an application, and/or a function (54).

**6.** Method according to any one of the preceding claims, whereas the command line option (62, 64, 68) is a representation of a combination and/or sequence of elements (54, 56, 58) of the execution context (46).

**7.** Method according to any one of the preceding claims, whereas the command line option (52, 64, 68) is a representation of a function (54), and/or an object (56), and/or a combination of functions (54), and/or a combination of objects (56), and/or a combination of functions (54) and objects (56).

**8.** Method according to any one of the preceding claims, whereas execution context represented by the command line options comprises a combination of functions and/or objects.

**10.** Method according to any one of the preceding claims, whereas the development environment is comprised by a manufacturing execution system.

**11.** System (40) comprising means adapted for executing all method steps of any one of the preceding claims.

**12.** System according to claim 11, whereas the system is a manufacturing execution system.
